# EUROPÄISCHE PATENTSCHRIFT

(11) **EP 3 791 114 B1**
(45) Veröffentlichungstag und Bekanntmachung des Hinweises auf die Patenterteilung: **12.03.2025**
(21) Anmeldenummer: 19723090.7
(22) Anmeldetag: 08.05.2019
(51) Int. Cl.: F24D 3/18, F24D 17/02, F24D 19/10, F25B 6/04, F25B 40/00, F25B 5/04, F25B 29/00, F25B 47/02, F24F 5/00

(54) **HEIZUNGS- UND/ODER WARMWASSERBEREITUNGSSYSTEM**
HEATING AND/OR HOT WATER SUPPLY SYSTEM
SYSTÈME DE CHAUFFAGE ET/OU DE PRODUCTION D'EAU CHAUDE SANITAIRE

(30) Priorität: 08.05.2018 DE 102018111056
(43) Veröffentlichungstag der Anmeldung: 17.03.2021
(73) Patentinhaber: Stiebel Eltron GmbH & Co. KG, 37603 Holzminden (DE)
(72) Erfinder: MÖLLER, Judith, 37603 Holzminden (DE); SCHRÖDER, Nikolas, 32839 Steinheim (DE); BRUGMANN, Johannes, 37671 Höxter (DE); HERRS, Martin, 37671 Höxter (DE); HILDEBRANDT, Silvia, 37671 Höxter (DE)
(74) Vertreter: Eisenführ Speiser
(86) Internationale Anmeldenummer: PCT/EP2019/061834
(87) Internationale Veröffentlichungsnummer: WO 2019/215240

(56) Entgegenhaltungen:
- EP-A1- 2 541 169
- WO-A1-2007/004962
- BE-A6- 1 015 448
- US-A- 4 955 207

## Beschreibung

Die vorliegende Erfindung betrifft ein Heizungs- und/oder Warmwasserbereitungssystem, das dazu eingerichtet ist, Heizungswasser und/oder Warmwasser zu erzeugen.

Bekannt ist, Warmwasser und Heizungswasser über unterschiedliche Heizer zu erwärmen. Derartige Heizer umfassen beispielsweise Wärmepumpen, aber auch Direktheizungen sind denkbar. Die Nutzung des gleichen Heizers oder Wärmeerzeugers zur Warmwasser- und Heizungswassererzeugung ist möglich, allerdings erfolgt dabei die Bereitstellung von Warmwasser und Heizungsenergie alternativ, das heißt während Warmwasser erzeugt wird, erfolgt keine Erwärmung des Heizungswassers und die durch die Heizung erwärmten Räume drohen abzukühlen.

Grund für die Schwierigkeiten der parallelen Erwärmung von Warmwasser und Heizungswasser ist insbesondere, dass das erzeugte Heizungswasser und das erzeugte Warmwasser mit unterschiedlichen Temperaturen bereitgestellt werden. Eine typische Vorlauftemperatur für Heizungswasser ist beispielsweise im Bereich von 50 bis 60°C, wobei insbesondere moderne Passivhäuser auch deutlich niedrigere Heizungsvorlauftemperaturen ermöglichen. Die Wunschtemperatur für Warmwasser hingegen kann deutlich darüber liegen.

Bei einem Parallelbetrieb der Heizungswasser- und Warmwassererzeugung bei bekannten Systemen würde demnach entweder eine zu hohe Heizungsvorlauftemperatur und demnach ein hoher Wärmeverlust oder eine niedrige Warmwassertemperatur die Folge sein. Die alternative Bereitstellung von Warmwasser und Heizenergie sorgt, wie erwähnt, dafür, dass beispielsweise während der Erzeugung von Warmwasser kein Heizen der Wohnräume möglich ist und demnach die Temperatur unangenehm abfallen kann.

Bekannte Lösungsversuche bestehen darin, große Pufferspeicher bereitzustellen, um dennoch jederzeit ausreichend warmes Heizungswasser bzw. Warmwasser zur Verfügung stellen zu können. Derartige große Pufferspeicher haben ungünstiger Weise einen hohen Platzbedarf. Ebenso ist bei der Nutzung getrennter Erzeuger für Warmwasser und Heizungswasser ein ungünstig großer Platzbedarf vorhanden.

WO 2007/004962 A1 offenbart ein Heizsystem, umfassend eine Wärmepumpe zum gleichzeitigen oder separaten Aufheizen eines Warmwasserkreises und eines Heizungskreises. In einem Abschnitt eines Heizkreislaufs ist ein einstellbares Umschaltventil angeordnet, mittels dem Teilmengen des Mediums in Richtung des Heizkreises und/oder des Warmwasserkreises geleitet werden.

US 4,955,207 A1 offenbart eine kombinierte Heißwassererhitzer-Kühlanordnung mit einer Kühlanordnung, die über ein Wärmerohr an einen Heißwassertank gekoppelt ist. Das wärmeabgebende Ende des Wärmerohrs befindet sich nahe dem Boden des Heißwassertanks.

Vor diesem Hintergrund war es eine Aufgabe der vorliegenden Erfindung, Warmwasser und Heizungswasser ohne die bekannten Nachteile des Standes der Technik mit einem einzigen Heizgerät, insbesondere einer Wärmepumpe, bereitzustellen.

Gemäß einem Aspekt der Erfindung wird ein Heizungs- und/oder Warmwasserbereitungssystem gemäß Anspruch 1 bereitgestellt. Das System umfasst einen Heizkreislauf und einen Wärmepumpenkreislauf, wobei der Wärmepumpenkreislauf eine Wärmeübertragereinrichtung aufweist, die dazu eingerichtet ist, Wärme aus dem Wärmepumpenkreislauf an den Heizkreislauf zu übertragen. Der Heizkreislauf umfasst einen Heizungskreis mit Heizungsvorlauf und Heizungs-nachlauf, einen Warmwasserkreis mit Warmwasservorlauf und Warmwassernachlauf und einen regelbaren Mischer, wobei der Mischer dazu eingerichtet ist, einen Volumenstrom durch den Heizkreislauf wenigstens zwischen Heizungsvorlauf und Warmwasservorlauf aufzuteilen. Die Wärmeübertragereinrichtung weist einen ersten Wärmeübertrager und in Serie damit einen zweiten Wärmeübertrager auf. Der zweite Wärmeübertrager ist dazu eingerichtet, Wärme an den Heizkreislauf vor dem Mischer zu übertragen und der erste Wärmeübertrager ist dazu eingerichtet, Wärme an den Warmwasservorlauf hinter dem Mischer zu übertragen.

Dadurch, dass die Wärmeübertragereinrichtung zwei in Serie geschaltete Wärmeübertrager aufweist, kann der Warmwasservorlauf auf eine höhere Temperatur erwärmt werden, als der Heizungskreis, was nachfolgend noch weiter erläutert wird. Hierbei ist anzumerken, dass die Wärmeübertrager in Strömungsrichtung des Kältemittels, also auf Seite des Wärmepumpenkreises, in Serie geschalten sind, nicht notwendigerweise jedoch auf Seite des Heizkreislaufs. Somit kann der Warmwasserkreis Warmwasser mit einer höheren Temperatur erzeugen, als für den Heizungsvorlauf benötigt wird. Ein energieoptimierter Betrieb des Heizungs- und/oder Warmwasserbereitungssystem ist somit gewährleistet.

Hierbei bedeutet "in Serie" insbesondere, dass der erste Wärmeübertrager und der zweite Wärmeübertrager zu nacheinander liegenden Zeitpunkten von demselben Kältemittel durchströmt werden. Hierbei ist unerheblich, ob sich zwischen dem ersten Wärmeübertrager und dem zweiten Wärmeübertrager in Strömungsrichtung des Kältemittels weitere Komponenten des Wärmepumpenkreislaufs befinden, solange die sequentielle, das heißt nicht parallele, Durchströmung des ersten und zweiten Wärmeübertragers bestehen bleibt. Noch anders ausgedrückt lässt sich die Anordnung "in Serie" von einer parallelen Schaltung des ersten Wärmeübertragers und des zweiten Wärmeübertragers abgrenzen.

Ferner ist dadurch, dass der regelbare Mischer vorgesehen ist, ein gleichzeitiger Betrieb der Heizung und eine Bereitstellung von Warmwasser möglich. Im Vergleich mit Umschaltventilen bekannter Lösungen wird dadurch vermieden, dass Raumtemperaturen bei einer Bereitstellung von Warmwasser unerwünschter Weise absinken. Durch die geschickte Regelung des Mischers ist es möglich, die von dem Wärmepumpenkreislauf aufgebrachte Heizleistung optimal zwischen Warmwassererzeugung und Heizungskreis aufzuteilen.

Durch den Wärmepumpenkreislauf strömt vorzugsweise ein geeignetes Kältemittel. Dabei sind vorteilhafterweise sämtliche Arten von Wärmepumpen einsetzbar, beispielsweise Luft- oder Solewärmepumpen.

Der erste Wärmeübertrager ist als Enthitzer und der zweite Wärmeübertrager ist als Verflüssiger ausgestaltet. Entsprechend wird das gasförmige Kältemittel, das durch den Wärmepumpenkreislauf durch die Wärmeübertragereinrichtung strömt, in dem ersten Wärmeübertrager gekühlt, ohne jedoch wesentlich zu verflüssigen, während der Phasenübergang in die flüssige Phase im Wesentlichen in dem zweiten Wärmeübertrager stattfindet.

So kann beispielsweise die Temperatur des Kältemittels in dem Enthitzer von 90°C (30°C-150°C) auf 57°C (20°C-150°C) reduziert werden, während das Kältemittel in dem in Reihe damit angeordneten Verflüssiger dann von 57°C (20°C-150°C) auf 49°C (15°C-80°C) abgekühlt und dabei verflüssigt wird. Die Werte in Klammern bezeichnen die - in Abhängigkeit des gewählten Kältemittels - typischerweise zu erwartenden Temperaturbereiche an den betreffenden Positionen. Zugleich kann beispielsweise das Wasser des Heizkreislaufs von beispielsweise 47°C (10°C-80°C) durch den Verflüssiger auf beispielsweise 55°C (15°C-85°C) erwärmt werden und damit die gewünschte Vorlauftemperatur erreichen. Nach dem Mischer kann der Warmwasservorlauf dann weiter beispielsweise auf 75°C (15°C-95°C) erwärmt werden. Natürlich sind die Zahlenwerte exemplarisch zu verstehen, um das Funktionsprinzip der Erfindung zu verdeutlichen.

Erfindungsgemäß ist der Enthitzer als Wärmerohr, Thermosiphon und/oder Heatpipe zwischen Wärmepumpenkreislauf und Warmwasserkreis ausgestaltet.

Besonders vorteilhaft an der Ausgestaltung als Wärmerohr, Termosiphon und/oder Heatpipe ist, dass eine Wärmeübertragung nur so lange erfolgt, so lange ein Temperaturniveau im Warmwasserkreis einen bestimmten Wert nicht überschreitet, der beispielsweise durch die Temperatur des Kältemittels in dem Enthitzer sowie der Ausgestaltung des Enthitzers bestimmt ist. Der Enthitzer ist in diesem Fall sozusagen selbstbeschränkend. Dadurch kann auch dann, wenn in dem Warmwasserkreis kein Fluid strömt ein Sieden und eine mögliche Beschädigung des gesamten Systems verhindert werden.

Besonders bevorzugt ist der Enthitzer als Wärmerohr ausgestaltet. Die Zirkulation eines Kältemittels in dem Wärmerohr erfolgt aufgrund der Schwerkraft und nicht, beispielsweise wie in der Heatpipe, aufgrund von Kapillareffekten. Die Ausgestaltung der Wärmeübertragung durch das Wärmerohr kann somit durch die Einbaulage beeinflusst werden.

Ein Druckverlust über den ersten Wärmeübertrager ist unterschiedlich von einem Druckverlust über den zweiten Wärmeübertrager. Druckverluste sind mit Leistungseinbußen verbunden und daher eher unerwünscht, besonders für den Verflüssiger sind aber Wärmeübertrager mit hohem Druckverlust, in Form eines Plattenwärmeübertragers, aufgrund ihrer hohen Wärmeübertragungsleistung vorteilhaft. Besonders hat es sich aus Effizienzbetrachtungen als vorteilhaft herausgestellt, den ersten Wärmeübertrager mit einem geringeren Druckverlust als den zweiten Wärmeübertrager einzurichten.

In einer Ausführungsform ist der Warmwasserkreis angeordnet, einen Warmwasserspeicher auf eine gewünschte Temperatur zu erhitzen, wobei der Mischer dazu eingerichtet ist, den Volumenstrom insbesondere durch den Warmwasserkreis derart zu regeln, dass die Temperatur in dem Warmwasserspeicher dem gewünschten Wert nachfolgt.

Demnach kann gewährleistet sein, dass in dem Warmwasserspeicher zu jeder Zeit ausreichend Warmwasser mit der gewünschten Temperatur zur Verfügung steht, ohne dass die Temperatur des Fluids in dem Heizungskreis absinkt, da gleichzeitig eine Erzeugung von Warmwasser und eine Versorgung des Heizungskreises erfolgt.

In einer Ausführungsform ist in dem Heizkreislauf eine Umwälzpumpe angeordnet. Die Umwälzpumpe sorgt dafür, dass das Heizkreisfluid, insbesondere Wasser, durch den Heizkreis, das heißt den Heizungskreis und/oder den Warmwasserkreis strömt.

In einer Ausführungsform ist in dem Warmwasservorlauf dem ersten Wärmeübertrager nachgeordnet eine Direktheizung angeordnet. In einigen Fällen kann es vorkommen, dass auch die Reihenschaltung aus erstem Wärmeübertrager und zweitem Wärmeübertrager nicht genügend Energie auf den Warmwasservorlauf überträgt, beispielsweise im Fall von Luft-/Wasserwärmepumpen bei sehr kalten Außentemperaturen, so dass die Temperatur des Warmwasservorlaufes nicht den erforderlichen Wert erreicht. In diesem Fall kann durch die Direktheizung diese Temperaturdifferenz ausgeglichen werden.

Die Direktheizung kann beispielsweise als elektrische Direktheizung ausgestaltet sein, wobei auch andere Ausgestaltungen möglich sind.

In einer Ausführungsform ist eine Bypassleitung zum Vorbeileiten eines durch den Wärmepumpenkreislauf zirkulierenden Kältemittels an dem ersten Wärmeübertrager angeordnet. Durch die Bypassleitung verhindert werden, dass in einem reinen Heizbetrieb, wenn also nur eine sehr geringe oder keine Strömung durch den Warmwasserkreis verläuft, ein weiterer Energieeintrag in den Warmwasserkreis erfolgt, wodurch ein Sieden des Mediums in dem Warmwasserkreis verhindert wird. Vorzugsweise ist die Bypassleitung durch eine Steuerung des Heizungs- und/oder Warmwasserbereitungssystems regelbar, wobei die Steuerung die Bypassleitung vorzugsweise zusammen mit bzw. in Abhängigkeit von der Position des Mischers steuert.

In einer Ausführungsform ist das Heizungs- und/oder Warmwasserbereitungssystem in einem reinen Heizbetrieb, einem reinen Warmwasserbetrieb und einem Parallelbetrieb aus Heizbetrieb und Warmwasserbetrieb betreibbar.

In einer Ausführungsform wird im Heizbetrieb ein Mindestvolumenstrom durch den Warmwasserkreis aufrechterhalten, wobei der Mindestvolumenstrom derart bemessen ist, dass ein Sieden in dem Warmwasserkreis verhindert ist.

Demnach ist in dieser Ausführungsform alternativ oder zusätzlich zu der Bypassleitung in dem Wärmepumpenkreislauf vorzugsweise eine geeignete Ausgestaltung des Warmwasserkreises vorgesehen, die auch in einem reinen Heizbetrieb eine gewisse Mindestzirkulation durch den Warmwasserkreis sicherstellt. Auch dadurch kann eine Gefahr des Siedens in dem Warmwasserkreis verringert werden.

In einer Ausführungsform weist der Wärmepumpenkreislauf ein Umschaltventil auf, wobei das Umschaltventil derart angeordnet ist, dass eine Strömungsrichtung eines durch den Wärmepumpenkreislauf strömenden Kältemittels bei einem Umschalten des Umschaltventils in dem ersten Wärmeübertrager gleichbleibt und sich in dem zweiten Wärmeübertrager umkehrt.

Es ist bekannt, dass es im Kreisumkehrbetrieb, wenn eine Abtauung des Verdampfers erfolgen soll, zu einer unerwünschten Abkühlung des ersten Wärmeübertragers kommen kann. Diese Gefahr wird durch die besonders geschickte Anordnung des ersten Wärmeübertragers in dem Wärmepumpenkreislauf gebannt, nämlich dadurch, dass die Kreisumkehr lediglich zu einer Abkühlung des zweiten Wärmeübertragers führt, während der erste Wärmeübertrager weiter in der Lage ist, Wärme aus dem Wärmepumpenkreislauf abzugeben. Es wird somit ermöglicht, dass bei Kreisumkehr und im Kühlbetrieb eine Warmwasserbereitung bei gleichzeitiger Kühlung dse Raumes geschieht. Die Energie der Kühlung des Raumes wird an den Warmwasserspeicher abgegeben.

Vorzugsweise ist die Anordnung dadurch realisiert, dass der erste Wärmeübertrager und der zweite Wärmeübertrager auf unterschiedlichen Seiten des Umschaltventils angeordnet sind.

In einem weiteren Aspekt betrifft die Erfindung ein Verfahren zur Regelung eines erfindungsgemäßen Heizungs- und/oder Warmwasserbereitungssystems, wobei das Verfahren ein Einstellen einer Position eines Mischers zwischen Heizungskreis und Warmwasserkreis eines Heizkreislaufs in Abhängigkeit einer Temperatur eines Warmwasserspeichers umfasst.

Dadurch wird sowohl die für den Heizungskreis als auch für den Warmwasserkreis benötigte Heizung optimal gewählt, so dass die Heizeinrichtung, insbesondere eine Wärmepumpe, welche die Energie zum Erwärmen des Heizungskreises bereitstellt, mit optimaler Leistungseinstellung betrieben werden kann.

Weitere Vorteile und vorteilhafte Ausgestaltungen werden nachfolgend mit Verweis auf die beigefügten Figuren verdeutlicht. Hierbei zeigen:
- Fig. 1: schematisch und exemplarisch ein Ausführungsbeispiel eines Heizungs- und/oder Warmwasserbereitungssystems im Parallelbetrieb,
- Fig. 2: schematisch und exemplarisch das Ausführungsbeispiel der Fig. 1 im reinen Heizbetrieb,
- Fig. 3: schematisch und exemplarisch das Ausführungsbeispiel der Fig. 1 im reinen Warmwasserbetrieb,
- Fig. 4: schematisch und exemplarisch ein weiteres Ausführungsbeispiel mit Bypassleitung im Warmwasserkreis,
- Fig. 5: schematisch und exemplarisch ein weiteres Ausführungsbeispiel eines Heizungs- und/oder Warmwasserbereitungssystems,
- Fig. 6: schematisch und exemplarisch das Ausführungsbeispiel der Fig. 5 im reinen Heizbetrieb,
- Fig. 7: schematisch und exemplarisch das Ausführungsbeispiel der Fig. 5 im reinen Warmwasserbetrieb,
- Fig. 8: schematisch und exemplarisch ein weiteres Ausführungsbeispiel eines Heizungs- und/oder Warmwasserbereitungssystems,
- Fig. 9: schematisch und exemplarisch das Ausführungsbeispiel der Fig. 8 im Abtaubetrieb,
- Fig. 10: schematisch und exemplarisch eine weitere Ausführung des Heiz- und Warmwasserkreises,
- Fig. 11: schematisch und exemplarisch eine weitere Ausführung des Heiz- und Warmwasserkreises und
- Fig. 12: schematisch und exemplarisch eine weitere Ausführung eines Bypasses.

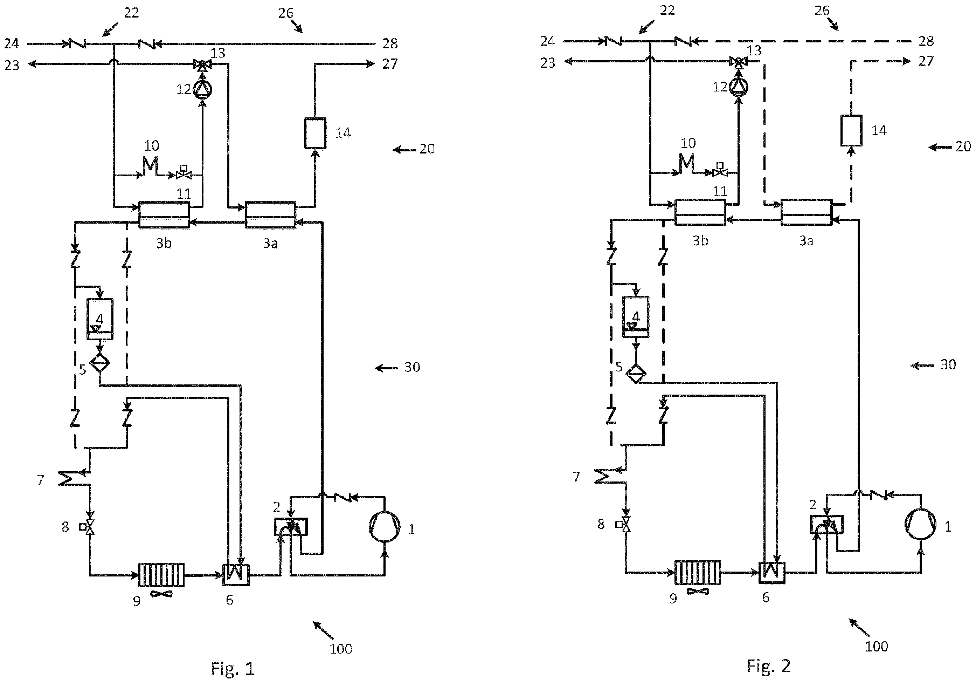

Fig. 1 zeigt schematisch und exemplarisch ein Ausführungsbeispiel eines Heizungs- und/oder Warmwasserbereitungssystems 100. Das Heizungs- und/oder Warmwasserbereitungssystem 100 umfasst einen Heizkreislauf 20 und einen Wärmepumpenkreislauf 30.

Der Heizkreislauf 20 ist dazu eingerichtet, parallel Heizungswasser und Warmwasser bereitzustellen und schließt zu diesem Zweck einen Heizungskreis 22 mit Heizungsvorlauf 23 und Heizungsnachlauf 24 sowie einen Warmwasserkreis 26 mit Warmwasservorlauf 27 und Warmwassernachlauf 28 ein. Zwischen Heizungsvorlauf 23 und Heizungsnachlauf 24 ist beispielsweise ein System von Heizkörpern angeordnet, die von erwärmtem Wasser durchströmt werden. Analog ist zwischen Warmwasservorlauf 27 und Warmwassernachlauf 28 ein Warmwasserspeicher angeordnet, wobei das Wasser innerhalb des Warmwasserspeichers durch das den Warmwasserkreis 26 durchströmende Wasser erwärmt wird.

In dem Heizkreislauf 20 ist eine Umwälzpumpe 12 angeordnet, die das Wasser oder sonstige Fluid in dem Heizkreislauf 20 zum Zirkulieren bringt. Die Aufteilung zwischen Heizungskreis 22 und Warmwasserkreis 26 wird durch einen regelbaren Mischer 13 ermöglicht. Der regelbare Mischer 13 hat vorzugsweise verschiedene Stellungen, die von einem reinen Heizbetrieb, d.h. vollständiger Strömungsanteil in dem Heizungskreis 22, bis zu einem reinen Warmwasserbetrieb, d.h. vollständiger Strömungsanteil in dem Warmwasserkreis 26, mit beliebig fein einstellbaren Zwischenstufen reichen. Ferner findet sich eine zur Kühlung der Leistungselektronik vorgesehene Inverterkühlung 10 samt Kühlventil 11, die bedarfsgerecht eine erforderliche Kühlleistung direkt in den Heizkreislauf 20 abführt und somit nutzbar macht. Schließlich ist in dem Warmwasservorlauf 27 eine Direktheizung 14, beispielsweise eine elektrische Direktheizung, angeordnet, die gegebenenfalls eine nötige Nacherwärmung des Warmwasservorlaufes 27 auf die gewünschte Temperatur, beispielsweise bei sehr niedrigen Außentemperaturen, sicherstellt.

Besonders vorteilhaft wird der Mischer 13 des Heizungs- und/oder Warmwasserbereitungssystem 100 derart gesteuert, dass die Temperatur des nicht gezeigten Warmwasserspeichers, durch den der Warmwasserkreis 26 strömt, berücksichtig wird. Ferner wird vorzugsweise auch die Temperatur des Heizungsvorlaufs 23 berücksichtigt.

Nachfolgend wird der Wärmepumpenkreislauf 30 genauer beschrieben. Bei dem Wärmepumpenkreislauf 30 handelt es sich um ein Beispiel einer geeigneten Heizeinrichtung, auch ähnlich gestaltete, dem Fachmann bekannte Ausprägungen, beispielsweise unter Weglassen oder Ersetzen einer oder mehrerer Komponenten sind vorstellbar.

Der Wärmepumpenkreislauf 30 umfasst einen Kompressor oder Verdichter 1, der dazu eingerichtet ist, in dem Wärmepumpenkreislauf 30 zirkulierendes Kältemittel zu komprimieren. Ein Umschaltventil 2, das beispielsweise als 2-4-Wegeventil ausgeführt ist, gibt durch seine Stellung die Richtung der Zirkulation des Kühlmittels in dem Wärmepumpenkreislauf 30 vor. Beispielsweise ist die eine Zirkulationsrichtung für den - hauptsächlich einzusetzenden - Heizbetrieb geeignet, während die Umkehrrichtung besonders zur Abtauung eines Außenwärmetauschers, beispielsweise eines Verdampfers 9, ausgebildet ist.

In dem Wärmepumpenkreislauf 30 ist ferner eine Wärmeübertragereinrichtung 3, die einen Innenwärmetauscher darstellt, ein Sammler 4, ein Filtertrockner 5, ein Rekuperator 6, eine Abtauschlange 7 sowie ein Expansionsventil 8 angeordnet. Die Komponenten haben die im Bereich von Wärmepumpen bzw. Kältemittelkreisen üblichen und dem Fachmann geläufigen Bedeutungen. Natürlich ist die genaue Ausgestaltung, beispielsweise mit Abtauschlange 7 und Rekuperator 6 lediglich eine geeignete Ausgestaltung des Wärmepumpenkreislaufs 30, wobei auch andere Ausführungen ebenso möglich sind. Auch ist in dem Beispiel schematisch ein Luft-/Wasserwärmetauscher als Verdampfer 9 gezeigt, wobei die Erfindung nicht auf diese Form der Wärmepumpen beschränkt ist.

Die Wärmeübertragereinrichtung 3 weist einen ersten Wärmeübertrager 3a und einen in Serie dazu geschalteten zweiten Wärmeübertrager 3b auf. Der erste Wärmeübertrager 3a, der vorzugsweise als Enthitzer ausgestaltet ist, ist dazu eingerichtet, Wärme an den Warmwasservorlauf 27 zu übertragen. Das im Warmwasservorlauf 27 strömende Medium wurde bereits vorgewärmt und zwar durch den Energieübertrag des zweiten Wärmeübertragers 3b, der beispielsweise dem bekannten Verflüssiger entspricht. Damit kann erreicht werden, dass der Warmwasservorlauf 27 auf eine höhere Temperatur gehoben wird, als der Heizungsvorlauf 23.

Das durch den Wärmepumpenkreislauf 30 strömende Kältemittel gibt seine Energie demnach teilweise in dem ersten Wärmeübertrager 3a und teilweise in dem zweiten Wärmeübertrager 3b ab. Dadurch, dass die Temperatur bei Eintritt in den ersten Wärmeübertrager 3a höher ist als bei dem Eintritt in den zweiten Wärmeübertrager 3b ist folglich auch eine höhere Temperatur auf der Seite des Heizkreislaufs 20 nach Passieren des ersten Wärmeübertragers 3a möglich.

Die Veränderung der Temperatur des Kältemittels bei Durchströmen der Wärmeübertragereinrichtung 3 ist beinah gleich zu dem Fall eines klassischen, einteiligen Wärmeübertragers. Beispielsweise wird das Kältemittel in beiden Fällen, dem klassischen und dem erfindungsgemäßen, bei einem Druck von etwa 21 bar von 90°C auf 49°C abgekühlt. Durch die Aufteilung in ersten Wärmeübertrager 3a und zweiten Wärmeübertrager 3b kann die gewünschte Temperatur des Heizungsvorlaufs von beispielsweise 55°C mit beispielsweise 26 kW verfügbarer Leistung zum Heizen erreicht werden und gleichzeitig ein noch höheres Temperaturniveau, beispielsweise etwa 75°C, für den Warmwasservorlauf 27 möglich sein.

Folgende Regelungsfälle sind in diesem nicht erfindungsgemäßen Ausführungsbeispiel, mit einem Plattenwärmeübertrager als Enthitzer ausgestalteten ersten Wärmeübertrager 3a, denkbar.

Fall A1: Heizen mit Heißgas <100°C: Im reinen Heizbetrieb tritt der Heizungsrücklauf 24 in den als Verflüssiger ausgestalteten zweiten Wärmeübertrager 3b ein, wird erwärmt und von der Umwältzpumpe 12 über den Mischer 13 komplett "nach links" als Heizungsvorlauf 23 zum Heizungssystem zurückgeleitet. Über den Mischer 13 wird kein Wasser bzw. Medium über den Enthitzer 3a zum Warmwasserspeicher geleitet. Fall A1 oder A2 sind schematisch in Fig. 2 gezeigt, wobei Leitungen, in denen keine Strömung herrscht mit gestrichelten Linien gezeigt sind.

Fall A2: Heizen mit Heißgas > 100°C: Im reinen Heizbetrieb tritt der Heizungsrücklauf 24 in den als Verflüssiger ausgestalteten zweiten Wärmeübertrager 3b ein, wird erwärmt und von der Umwältzpumpe 12 zum Mischer 13 weitergefördert. Dort wird der Großteil beispielsweise des Wassers als Heizungsvorlauf 23 "nach links" zum Heizungssystem geleitet. Der andere Teil des Wassers wird "nach rechts" über den Enthitzer 3a geleitet, damit dort das Wasser nicht aufkocht, und weiter durch den Wasserspeicher hindurch. Alternativ oder zusätzlich kann für diesen Fall eine Bypassleitung vorgesehen sein.

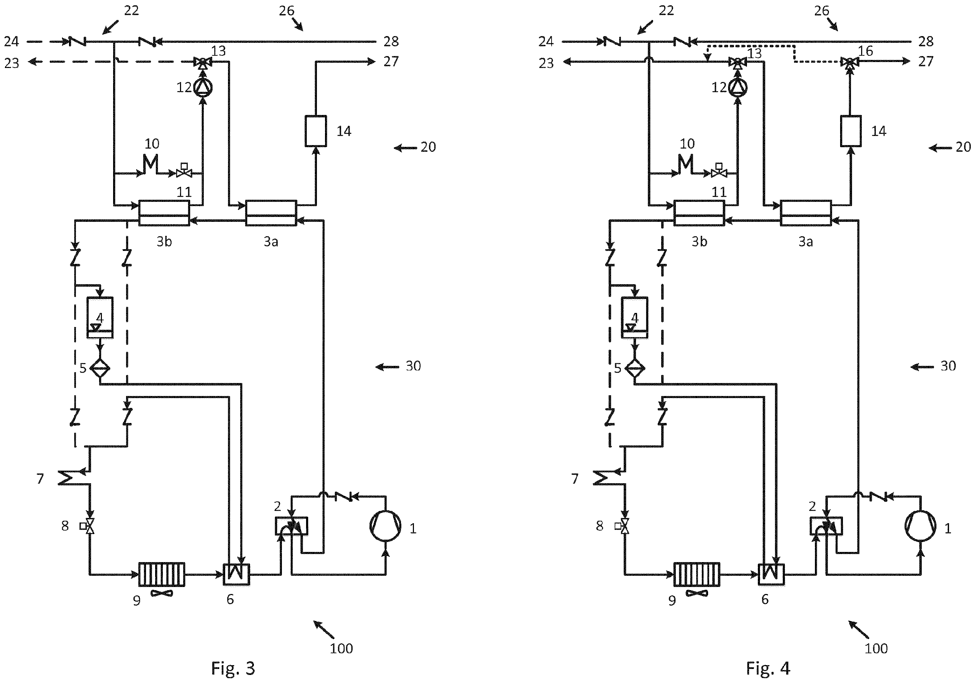

Fall B: Warmwasser. Im reinen Warmwasserbetrieb tritt der Warmwasserrücklauf 28 in den Verflüssiger 3b ein, wird erwärmt und von der Umwältzpumpe 12 über den Mischer 13 komplett "nach rechts" über den Enthitzer 3a geleitet. Nach der Wärmeaufnahme am Enthitzer 3a wird der Warmwasservorlauf 27 zum Warmwasserspeicher geleitet. Über den Mischer 13 wird in diesem Fall kein Wasser zur Heizung geleitet. Fall B ist schematisch in Fig. 3 gezeigt.

Fall C: Heizen und Warmwasser. Beim Parallelbetrieb tritt der gemeinsame Rücklauf von Heizung 24 und Warmwasser 28 in den Verflüssiger 3b ein, wird erwärmt und von der Umwältzpumpe 12 zum Mischer 13 weitergefördert. Dort wird ein Teil des Wassers als Heizungsvorlauf 23 "nach links" zum Heizungssystem geleitet. Der andere Teil des Wassers wird "nach rechts" zur weiteren Wärmeaufnahme über den Enthitzer 3a geleitet. Nach der Wärmeaufnahme am Enthitzer 3a wird der Warmwasservorlauf 27 zum Warmwasserspeicher geleitet. Fall C entspricht dem in Fig. 1 schematisch gezeigten Parallelbetrieb.

Neben der Möglichkeit zur konstanten und bedarfsgerechten Bereitstellung von Warmwasser und Heizleistung ergibt sich der Vorteil einer konstanten Warmwassertemperatur im Speicher, einer Ausnutzung der hohen Heißgastemperaturen nach der Kältmittelverdichtung, die über der Kältemittelkondesationstemperatur liegen, und eine geringe/kompakte Aufstellfläche.

Nicht gezeigt ist in dem schematischen Beispiel der Fig. 1 eine Bypassleitung zum Vorbeileiten von Kältemittel an dem ersten Wärmeübertrager 3a. In dem Fall, in dem beispielsweise ein reiner Heizbetrieb vorliegt, d.h. der Mischer 13 die Strömung durch den Heizkreislauf 20 ausschließlich oder nahezu ausschließlich durch den Heizungskreis 22 regelt, kann es unter Umständen zu einem Sieden im Warmwasservorlauf 27 kommen, wenn durch den ersten Wärmeübertrager 3a weiter Energie an den Warmwasservorlauf 27 übertragen wird. Dieser weitere Energieübertrag kann dann durch Führen des Kältemittels an dem ersten Wärmeübertrager 3a vorbei vermieden werden.

Eine Alternative ist die in Fig. 4 schematisch gezeigte Warmwasserbypass 16 im Warmwasserkreis 26. Hier ist durch den Warmwasserbypass 16 sichergestellt, dass auch dann, wenn keine Energie in den Warmwasserspeicher einzubringen ist, eine Strömung durch den Warmwasserkreis 26 möglich ist.

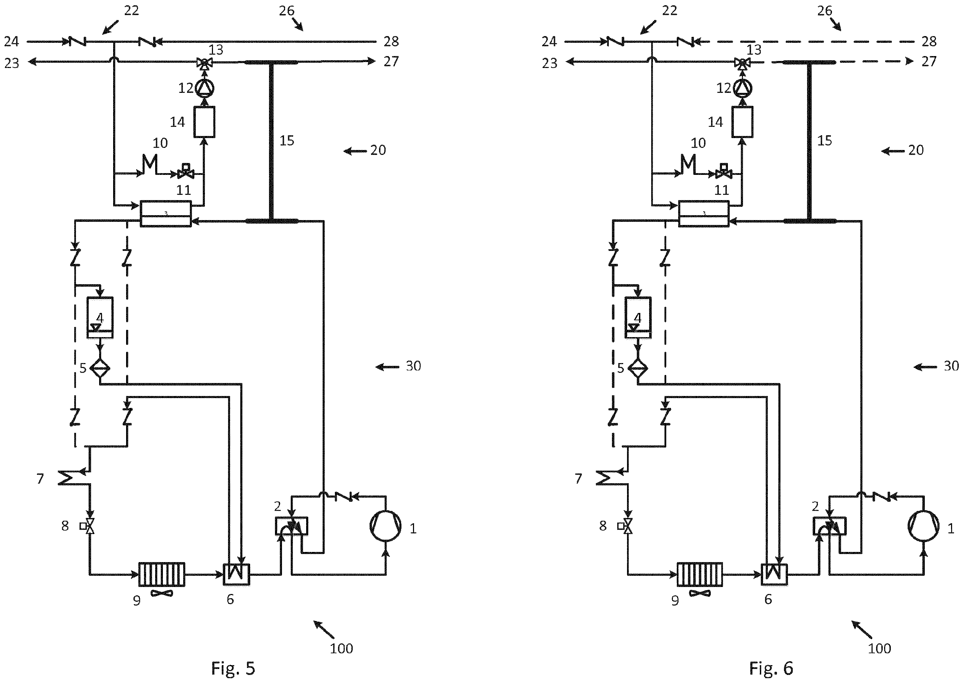

Fig. 5 zeigt schematisch und exemplarisch ein weiteres Ausführungsbeispiel eines Heizungs- und/oder Warmwasserbereitungssystems 100. Das Ausführungsbeispiel der Fig. 2 unterscheidet sich von dem Ausführungsbeispiel der Fig. 1 in der Ausgestaltung des ersten Wärmeübertragers 3a als Heatpipe 15.

Anstelle einer Heatpipe 15 kann ebenso oder zusätzlich ein Thermosiphon oder ein Wärmerohr eingesetzt werden. Bei der Verwendung einer Heatpipe 15 ist das Vorsehen einer Bypassleitung entbehrlich, da die Heatpipe 15 selbstbeschränkend ist und kein Energieübertrag stattfindet, wenn die Temperatur im Warmwasservorlauf 27 zu hoch ist, insbesondere in einem möglicherweise kritischen Bereich liegt.

In Fig. 5 ist auch die Direktheizung 14 an einer anderen Stelle, nämlich in dem Heizkreislauf 20 vor dem Mischer 13, angeordnet. Die Anordnung der Direktheizung kann genauso in dem Beispiel der Fig. 1 verwendet oder wie in dem Beispiel der Fig. 1 vorgesehen werden. Auch sind Kombinationen aus beiden Ausgestaltungen, d.h. mit mehr als einer Direktheizung, möglich.

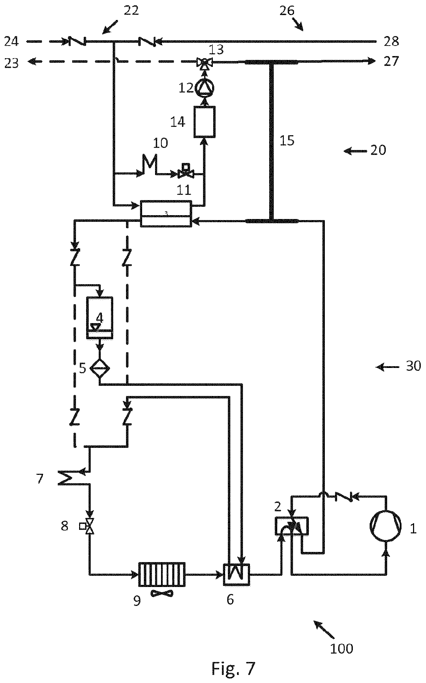

Vergleichbar mit Fig. 2 und 3 zeigen Fig. 6 und 7 schematisch einen reinen Heizbetrieb bzw. einen reinen Warmwasserbetrieb, während Fig. 5 den Parallelbetrieb illustriert.

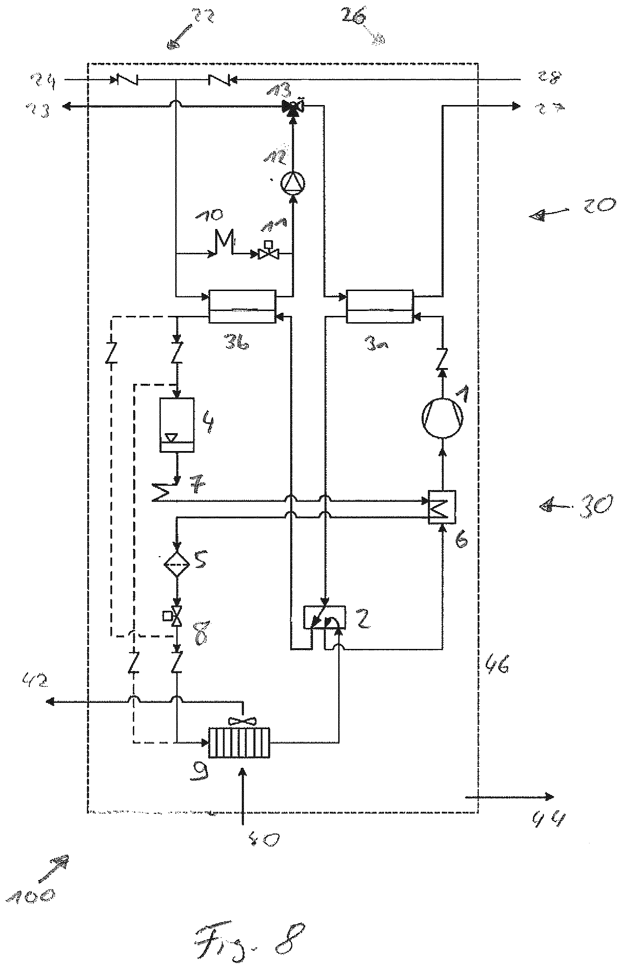

Fig. 8 zeigt schematisch und exemplarisch ein weiteres Ausführungsbeispiel eines Heizungs- und/oder Warmwasserbereitungssystems 100. Gegenüber der Ausführungsform der Fig. 1 ist die Position des Umschaltventils 2 bezüglich dem ersten Wärmeübertrager 3a, bzw. auf der anderen Seite bezüglich dem Rekuperator 6 oder dem Verdichter 1 unterschiedlich.

In Fig. 8 ist ein Heiz- und/oder Warmwasserbetrieb gezeigt, das heißt, das Umschaltventil 2 ist derart geschalten, dass ein Kältemittelstrom durch den Wärmepumpenkreislauf 30 in der Reihenfolge Verdichter 1, erster Wärmeübertrager 3a, zweiter Wärmeübertrager 3b strömt, wobei zwischen dem ersten Wärmeübertrager 3a und dem zweiten Wärmeübertrager 3b das Umschaltventil 2 angeordnet ist. In diesem Betrieb ist die Funktion der Ausführung der Fig. 8 vergleichbar der Funktion der Ausführung der Fig. 1.

In einem reinen Heizbetrieb ist der Mischer 13 auf Seite des Warmwasserkreises 26 geschlossen. Das Kühlventil 11 und das Expansionsventil 8 werden geregelt. In einem kombinierten Heiz- und Warmwasserbetrieb werden sowohl der Mischer 13, das Kühlventil 11 und das Expansionsventil 8 geregelt, während in einem reinen Warmwasserbetrieb der Mischer 13 geöffnet ist.

Weiter sind in Fig. 8 ein Lufteinlass 40 von draußen und ein Luftauslass 42 nach draußen eingezeichnet, wobei der Luftstrom über den Verdampfer 9 geführt wird. Eine Sicherheitsausblasung 44 nach draußen ist ebenfalls als eine Wärmepumpen-Systemgrenze 46, die mit gestrichelten Linien gezeichnet ist, durchdringend dargestellt.

Die Ausführung der Fig. 8 kann ebenso mit den Ausführungen der Fig. 1-7 kombiniert werden, das heißt insbesondere, dass genauso eine Direktheizung 14, eine Heatpip 15 oder ein Warmwasserbypass 16 vorgesehen sein kann, zum Beispiel.

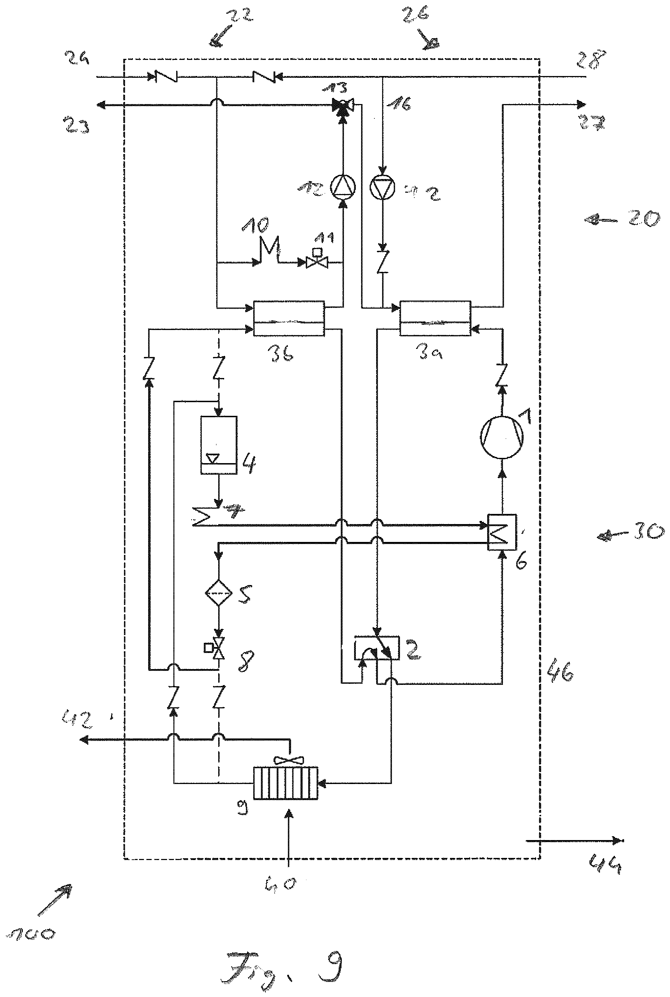

Fig. 9 zeigt schematisch und exemplarisch das Ausführungsbeispiel der Fig. 8 im Abtau- bzw. Kühlbetrieb, das heißt nach Umkehrung des Umschaltventils 2.

Es kann gesehen werden, dass sich nicht nur die Richtung des Kältemittels, sondern auch die Reihenfolge der durch das Kältemittel durchströmten Bauteile des Wärmepumpenkreislaufes 30 geändert hat.

So wird der zweite Wärmeübertrager 3b nun vor dem Verdichter 1, also auf der Niederdruckseite, von Kältemittel durchströmt, während der erste Wärmeübertager 3a nach dem Verdichter 1 und somit weiterhin auf der Hochdruckseite durchströmt wird. Die Durchströmungsrichtung durch den zweiten Wärmeübertrager 3b hat sich gedreht, während sie durch den ersten Wärmeübertrager 3a gleichbleibt. Die Gefahr einer unerwünschten Ab- bzw. Unterkühlung des ersten Wärmeübetragers 3a im Abtaubetrieb des Verdampfers 9 ist daher verringert.

Zusätzlich ist in Fig. 9 der Warmwasserbypass 16 eingezeichnet. Damit wird ein unabhängiger Warmwasserbetrieb auch im Kühl- bzw. Abtaubetrieb gewährleistet. Anders ausgedrückt ermöglicht die Ausführung der Fig. 9, dass sowohl ein Abtaubetrieb bzw. ein Kühlen des Raumes möglich ist, gleichzeitig aber auch das Bereitstellen von Warmwasser gelingt. Die Kühlung des Raumes dient sozusagen gleichzeitig der Erwärmung des bereitgestellten Wassers.

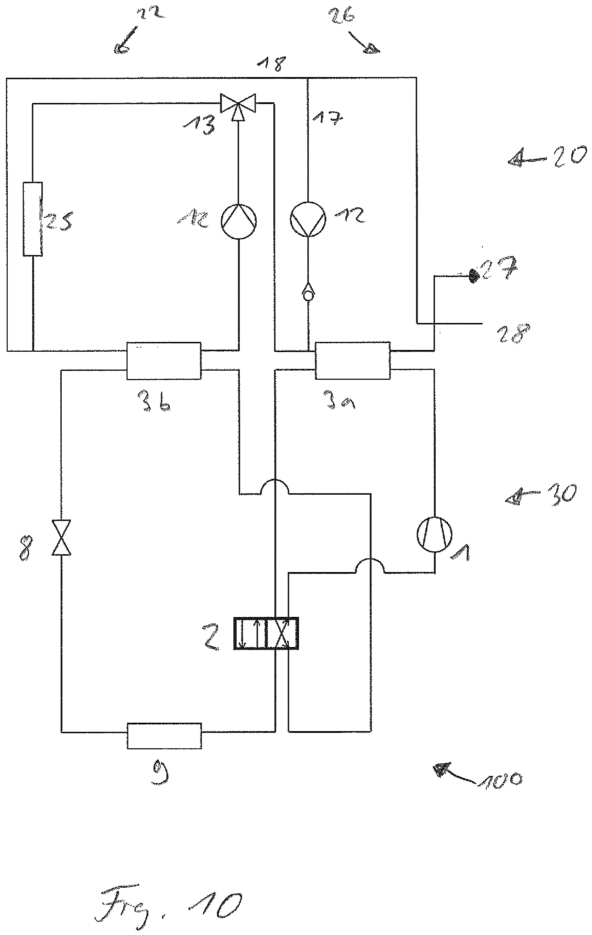

Fig. 10 zeigt schematisch und exemplarisch eine weitere Ausführung des Heiz- und Warmwasserkreises der Ausführungsform in Fig. 8. Zusätzlich ist ein Warmwasserrücklaufbypass 17 angeordnet, der eine direkte Verbindung zwischen dem Heizungsrücklauf 28 und dem Heizungsvorlauf 27 vor dem ersten Wärmeübertrager 3a bereitstellt. In dem Warmwasserrücklaufbypass 17 ist eine Umwälzpumpe 12 angeordnet, die eine Strömung durch den Warmwasserkreis 26 ermöglicht. Ferner ist ein Heizungsrücklaufbypass 18 vorgesehen und eine Heizung 25, beispielsweise ein oder mehrere Heizkörper, schematisch eingezeichnet.

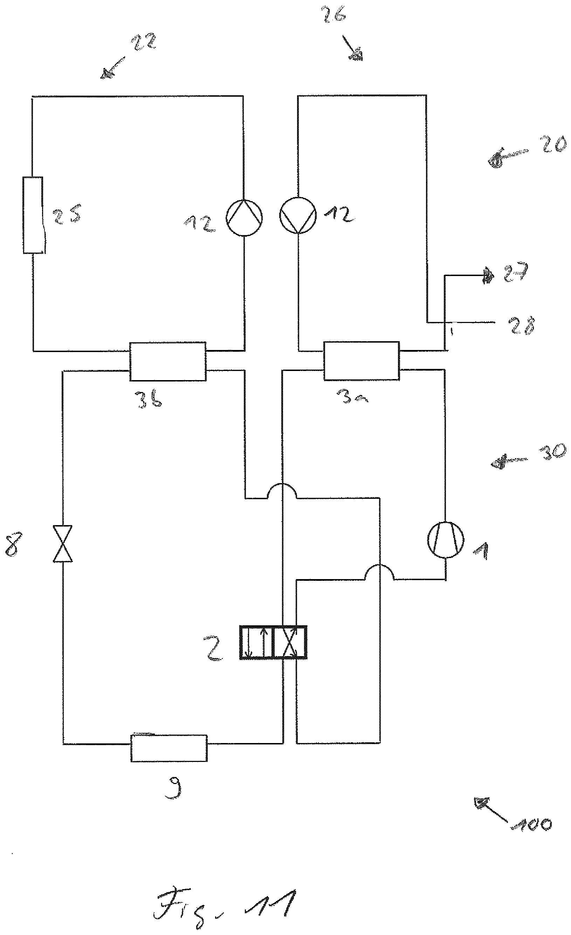

Fig. 11 zeigt schematisch und exemplarisch eine weitere Ausführung des Heiz- und Warmwasserkreises. Hierbei ist der Heizungskreis 22 und der Warmwasserkreis 26 als separate Kreise ausgebildet.

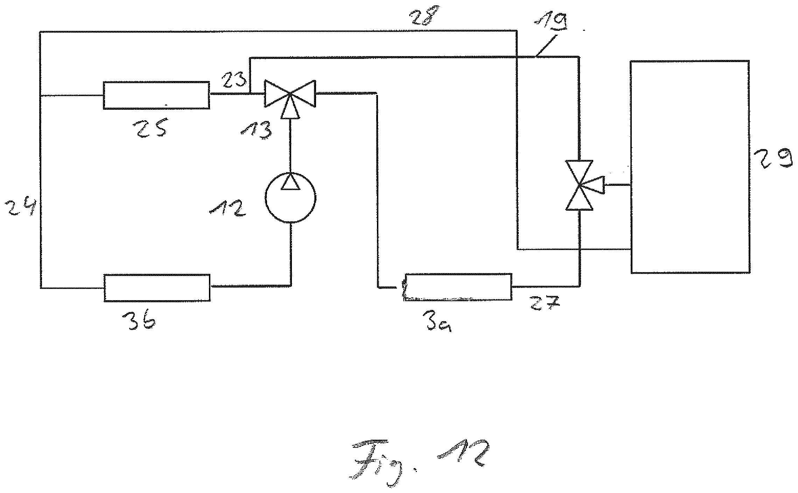

Fig. 12 zeigt schematisch und exemplarisch eine weitere Ausführung eines Warmwasserbypasses 19. Anders als in Fig. 11 führt der Warmwasserbypass 19 direkt von dem Warmwasservorlauf 27 vor einem Warmwasserspeicher 29 mit dem Heizungsvorlauf 23 vor der Heizung 25 zusammen.

### Liste der Bezugszeichen

- 1: Verdichter
- 2: Umschaltventil
- 3: Wärmeübertragereinrichtung
- 3a: erster Wärmeübertrager
- 3b: zweiter Wärmeübertrager
- 4: Sammler
- 5: Filtertrockner
- 6: Rekuperator
- 7: Abtauschlange
- 8: Expansionsventil
- 9: Verdampfer
- 10: Inverterkühlung
- 11: Kühlventil
- 12: Umwälzpumpe
- 13: Mischer
- 14: Direktheizung
- 15: Heatpipe
- 16: Warmwasserbypass
- 17: Warmwasserrücklaufbypass
- 18: Heizungsrücklaufbypass
- 19: Warmwasserbypass
- 20: Heizkreislauf
- 22: Heizungskreis
- 23: Heizungsvorlauf
- 24: Heizungsnachlauf
- 25: Heizung
- 26: Warmwasserkreis
- 27: Warmwasservorlauf
- 28: Warmwassernachlauf
- 29: Warmwasserspeicher
- 30: Wärmepumpenkreislauf
- 40: Lufteinlass
- 42: Luftauslass
- 44: Sicherheitsausblasung
- 46: Wärmepumpen-Systemgrenze
- 100: Heizungs- und/oder Warmwasserbereitungssystem

## Patentansprüche

1. Heizungs- und/oder Warmwasserbereitungssystem (100) umfassend
einen Heizkreislauf (20) und einen Wärmepumpenkreislauf (30), wobei der Wärmepumpenkreislauf (30) eine Wärmeübertragereinrichtung (3) aufweist, die dazu eingerichtet ist, Wärme aus dem Wärmepumpenkreislauf (30) an den Heizkreislauf (20) zu übertragen,
wobei der Heizkreislauf (20) einen Heizungskreis (22) mit Heizungsvorlauf (23) und Heizungsnachlauf (24), einen Warmwasserkreis (26) mit Warmwasservorlauf (27) und Warmwassernachlauf (28) und einen regelbaren Mischer (13) umfasst, wobei der Mischer (13) dazu eingerichtet ist, einen Volumenstrom durch den Heizkreislauf (20) wenigstens zwischen Heizungsvorlauf (23) und Warmwasservorlauf (27) aufzuteilen,
wobei die Wärmeübertragereinrichtung (3) einen ersten Wärmeübertrager (3a) und in Serie damit einen zweiten Wärmeübertrager (3b) aufweist,
wobei der zweite Wärmeübertrager (3b) dazu eingerichtet ist, Wärme an den Heizkreislauf (20) vor dem Mischer (13) zu übertragen und
wobei der erste Wärmeübertrager (3a) dazu eingerichtet ist, Wärme an den Warmwasservorlauf (27) hinter dem Mischer (13) zu übertragen,
wobei der erste Wärmeübertrager (3a) als Enthitzer und der zweite Wärmeübertrager (3b) als Verflüssiger ausgestaltet sind,
**dadurch gekennzeichnet, dass** der Enthitzer als Wärmerohr, Thermosiphon und/oder Heatpipe (15) zwischen Wärmepumpenkreislauf (30) und Warmwasserkreis (26) und der Verflüssiger als Plattenwärmeübertrager ausgestaltet sind, wobei ein Druckverlust über den ersten Wärmeübertrager (3a) geringer als ein Druckverlust über den zweiten Wärmeübertrager (3b) ist.

2. Heizungs- und/oder Warmwasserbereitungssystem (100) nach Anspruch 1, wobei der Warmwasserkreis (26) angeordnet ist, einen Warmwasserspeicher auf eine gewünschte Temperatur zu erhitzen, wobei der Mischer (13) dazu eingerichtet ist, den Volumenstrom insbesondere durch den Warmwasserkreis (26) derart zu regeln, dass die Temperatur in dem Warmwasserspeicher dem gewünschten Wert nachfolgt.

3. Heizungs- und/oder Warmwasserbereitungssystem (100) nach Anspruch 1 oder 2, wobei in dem Heizkreislauf (20) eine Umwälzpumpe (12) angeordnet ist.

4. Heizungs- und/oder Warmwasserbereitungssystem (100) nach einem der vorstehenden Ansprüche, wobei in dem Warmwasservorlauf (27) dem ersten Wärmeübertrager (3a) nachgeordnet eine Direktheizung (14) angeordnet ist.

5. Heizungs- und/oder Warmwasserbereitungssystem (100) nach einem der vorstehenden Ansprüche, wobei eine Bypassleitung zum Vorbeileiten eines durch den Wärmepumpenkreislauf (30) zirkulierenden Kältemittels an dem ersten Wärmeübertrager (3a) angeordnet ist.

6. Heizungs- und/oder Warmwasserbereitungssystem (100) nach einem der vorstehenden Ansprüche, wobei das Heizungs- und/oder Warmwasserbereitungssystem (100) in einem reinen Heizbetrieb, einem reinen Warmwasserbetrieb und einem Parallelbetrieb aus Heizbetrieb und Warmwasserbetrieb betreibbar ist.

7. Heizungs- und/oder Warmwasserbereitungssystem (100) nach einem der vorstehenden Ansprüche, wobei im Heizbetrieb ein Mindestvolumenstrom durch den Warmwasserkreis aufrechterhalten wird, wobei der Mindestvolumenstrom derart bemessen ist, dass ein Sieden in dem Warmwasserkreis verhindert ist.

8. Heizungs- und/oder Warmwasserbereitungssystem (100) nach einem der vorstehenden Ansprüche, wobei der Wärmepumpenkreislauf (30) ein Umschaltventil (2) aufweist, wobei das Umschaltventil (2) derart angeordnet ist, dass eine Strömungsrichtung eines durch den Wärmepumpenkreislauf (30) strömenden Kältemittels bei einem Umschalten des Umschaltventils (2) in dem ersten Wärmeübertrager (3a) gleichbleibt und sich in dem zweiten Wärmeübertrager (3b) umkehrt.

9. Heizungs- und/oder Warmwasserbereitungssystem (100) nach Anspruch 8, wobei der erste Wärmeübertrager (3a) und der zweite Wärmeübertrager (3b) in dem Wärmepumpenkreislauf (30) auf unterschiedlichen Seiten des Umschaltventils (2) angeordnet sind.

10. Verfahren zur Regelung eines Heizungs- und/oder Warmwasserbereitungssystems nach einem der vorstehenden Ansprüche, wobei das Verfahren ein Einstellen einer Position eines Mischers (13) zwischen Heizungskreis (22) und Warmwasserkreis (26) eines Heizkreislaufs (20) in Abhängigkeit einer Temperatur eines Warmwasserspeichers umfasst.

## Claims

1. A heating and/or hot water heating system (100), comprising
a heating circuit (20) and a heat pump circuit (30), wherein the heat pump circuit (30) has a heat exchanging device (3) arranged to transfer heat from the heat pump circuit (30) to the heating circuit (20),
wherein the heating circuit (20) comprises a heating loop (22) with heating flow (23) and heating return (24), a hot water loop (26) with hot water flow (27) and hot water return (28), and an adjustable mixer (13), wherein the mixer (13) is arranged to split a volumetric flow through the heating circuit (20) at least between the heating system flow (23) and the hot water flow (27),
wherein the heat exchanging device (3) has a first heat exchanger (3a) and a second heat exchanger (3b) in series therewith,
wherein the second heat exchanger (3b) is arranged to transfer heat to the heating circuit (20) upstream of the mixer (13), and
wherein the first heat exchanger (3a) is arranged to transfer heat to the hot water flow (27) downstream of the mixer (13),
wherein the first heat exchanger (3a) is designed as a desuperheater and the second heat exchanger (3b) as a condenser,
**characterised in that** the desuperheater is designed as a heat pipe, thermosiphon and/or heatpipe (15) between the heat pump circuit (30) and the hot water loop (26) and the condenser is designed as a plate heat exchanger, wherein a pressure drop across the first heat exchanger (3a) is less than a pressure drop across the second heat exchanger (3b).

2. The heating and/or hot water heating system (100) according to claim 1, wherein the hot water loop (26) is arranged to heat a hot water storage tank to a required temperature, wherein the mixer (13) is arranged to control the volumetric flow, in particular through the hot water loop (26), such that the temperature in the hot water storage tank follows the required value.

3. The heating and/or hot water heating system (100) according to claim 1 or 2, wherein a circulation pump (12) is disposed in the heating circuit (20).

4. The heating and/or hot water heating system (100) according to any one of the preceding claims, wherein a direct heater (14) is disposed in the hot water flow (27) downstream of the first heat exchanger (3a).

5. The heating and/or hot water heating system (100) according to any one of the preceding claims, wherein a bypass line for diverting a refrigerant circulating through the heat pump circuit (30) is disposed on the first heat exchanger (3a).

6. The heating and/or hot water heating system (100) according to any one of the preceding claims, wherein the heating and/or hot water heating system (100) can be operated in a pure heating mode, a pure hot water mode and a parallel mode of heating mode and hot water mode.

7. The heating and/or hot water heating system (100) according to any one of the preceding claims, wherein, in the heating mode, a minimum volumetric flow through the hot water loop is maintained, wherein the minimum volumetric flow is sized such that boiling in the hot water loop is prevented.

8. The heating and/or hot water heating system (100) according to any one of the preceding claims, wherein the heat pump circuit (30) has a changeover valve (2), wherein the changeover valve (2) is disposed such that, upon changeover of the changeover valve (2), a flow direction of a refrigerant flowing through the heat pump circuit (30) remains the same in the first heat exchanger (3a) and is reversed in the second heat exchanger (3b).

9. The heating and/or hot water heating system (100) according to claim 8, wherein the first heat exchanger (3a) and the second heat exchanger (3b) are disposed on different sides of the changeover valve (2) in the heat pump circuit (30).

10. A method of controlling a heating and/or hot water heating system according to any one of the preceding claims, wherein the method comprises setting a position of a mixer (13) between the heating loop (22) and the hot water loop (26) of a heating circuit (20) in dependence of a temperature of a hot water storage tank.

## Revendications

1. Système de préparation d'eau chaude et/ou de chauffage (100) comprenant :
un circuit de chauffe (20) et un circuit de pompe à chaleur (30), le circuit de pompe à chaleur (30) présentant un dispositif de transfert de chaleur (3) qui est conçu pour transférer de la chaleur du circuit de pompe à chaleur (30) au circuit de chauffe (20),
le circuit de chauffe (20) comprenant un circuit de chauffage (22) doté d'un départ chauffage (23) et d'un retour chauffage (24), un circuit d'eau chaude (26) doté d'un départ eau chaude (27) et d'un retour eau chaude (28) et un mélangeur (13) régulable, le mélangeur (13) étant conçu pour répartir un débit volumique dans le circuit de chauffe (20) au moins entre le départ chauffage (23) et le départ eau chaude (27),
le dispositif de transfert de chaleur (3) présentant un premier échangeur de chaleur (3a) et, monté en série avec celui-ci, un second échangeur de chaleur (3b),
le second échangeur de chaleur (3b) étant conçu pour transférer de la chaleur au circuit de chauffe (20) en amont du mélangeur (13) et
le premier échangeur de chaleur (3a) étant conçu pour transférer de la chaleur au départ eau chaude (27) en aval du mélangeur (13),
le premier échangeur de chaleur (3a) étant réalisé sous la forme d'un désurchauffeur et le second échangeur de chaleur (3b) sous la forme d'un condenseur,
**caractérisé en ce que** le désurchauffeur est réalisé sous la forme d'un tube échangeur de chaleur, d'un thermosiphon et/ou d'un caloduc (15) entre le circuit de pompe à chaleur (30) et le circuit d'eau chaude (26) et le condenseur sous la forme d'un échangeur de chaleur à plaques, la perte de charge dans le premier échangeur de chaleur (3a) étant inférieure à la perte de charge dans le second échangeur de chaleur (3b).

2. Système de préparation d'eau chaude et/ou de chauffage (100) selon la revendication 1, dans lequel le circuit d'eau chaude (26) est agencé de façon à chauffer un ballon d'eau chaude à une température souhaitée, le mélangeur (13) étant conçu pour réguler le débit volumique en particulier dans le circuit d'eau chaude (26) de telle manière que la température du ballon d'eau chaude suit la valeur souhaitée.

3. Système de préparation d'eau chaude et/ou de chauffage (100) selon la revendication 1 ou 2, dans lequel un circulateur (12) est agencé dans le circuit de chauffe (20).

4. Système de préparation d'eau chaude et/ou de chauffage (100) selon l'une quelconque des revendications précédentes, dans lequel un chauffage direct (14) est agencé dans le départ eau chaude (27) en aval du premier échangeur de chaleur (3a).

5. Système de préparation d'eau chaude et/ou de chauffage (100) selon l'une quelconque des revendications précédentes, dans lequel il est agencé une conduite de dérivation destinée à faire passer à côté du premier échangeur de chaleur (3a) un fluide frigorigène circulant dans le circuit de pompe à chaleur (30).

6. Système de préparation d'eau chaude et/ou de chauffage (100) selon l'une quelconque des revendications précédentes, le système de préparation d'eau chaude et/ou de chauffage (100) pouvant être exploité purement en mode chauffage, purement en mode eau chaude ou en mode parallèle chauffage et eau chaude.

7. Système de préparation d'eau chaude et/ou de chauffage (100) selon l'une quelconque des revendications précédentes, dans lequel, en mode chauffage, un débit volumique minimum circulant dans le circuit d'eau chaude est maintenu, le débit volumique minimum étant dimensionné de manière à empêcher une ébullition dans le circuit d'eau chaude.

8. Système de préparation d'eau chaude et/ou de chauffage (100) selon l'une quelconque des revendications précédentes, dans lequel le circuit de pompe à chaleur (30) présente une vanne d'inversion (2), la vanne d'inversion (2) étant agencée de telle manière que, lors de la commutation de la vanne d'inversion (2), le sens d'écoulement d'un fluide frigorigène s'écoulant dans le circuit de pompe à chaleur (30) reste identique dans le premier échangeur de chaleur (3a) et s'inverse dans le second échangeur de chaleur (3b).

9. Système de préparation d'eau chaude et/ou de chauffage (100) selon la revendication 8, dans lequel le premier échangeur de chaleur (3a) et le second échangeur de chaleur (3b) sont agencés dans le circuit de pompe à chaleur (30) sur différents côtés de la vanne d'inversion (2).

10. Procédé de régulation d'un système de préparation d'eau chaude et/ou de chauffage selon l'une quelconque des revendications précédentes, le procédé comprenant le réglage de la position d'un mélangeur (13) entre le circuit de chauffage (22) et le circuit d'eau chaude (26) d'un circuit de chauffe (20) en fonction de la température d'un ballon d'eau chaude.
